Europäisches Patentamt

European Patent Office

Office européen des brevets

(19)

(11) Veröffentlichungsnummer: **0 412 180 A1**

## (12) EUROPÄISCHE PATENTANMELDUNG

(21) Anmeldenummer: 89114589.8

(22) Anmeldetag: 07.08.89

(51) Int. Cl.5: **H02P 6/02**, H02P 5/40

(43) Veröffentlichungstag der Anmeldung:
**13.02.91 Patentblatt 91/07**

(84) Benannte Vertragsstaaten:
**DE ES FR GB IT**

(71) Anmelder: **Siemens Aktiengesellschaft**

Wittelsbacherplatz 2
D-8000 München 2(DE)

(72) Erfinder: **Frank, Manfred, Dipl.-Ing.**
**Veitstrasse 5**
**D-8741 Heustreu(DE)**

(54) **Antriebsanordnung mit einem Antriebsmotor.**

(57) Die Erfindung betrifft eine Antriebsanordnung mit einem Antriebsmotor, dem zumindest ein Stromregler (13) zugeordnet ist, durch den die Halbleiterschaltelemente (8) einer dem Antriebsmotor (1) vorgeschalteten elektronischen Leistungsstufe (9) in Abhängigkeit von einem Rotorlagegeber (5) steuerbar sind, dessen Läuferteil (5a) mit dem Motorläufer gekuppelt ist und eine der Polzahl des Antriebsmotors (1) entsprechende Anzahl magnetischer Pole aufweist, bei welcher Antriebsanordnung ferner der dem Stromregler (13) zugeführte Stromsollwert ($i_{soll}$) durch Überlagerung einer Hilfsspannung im jeweiligen Kommutierungszeitpunkt erhöht ist. Durch Fertigungstoleranzen bedingte Drehmomentschwankungen lassen sich dadurch ausschalten, daß am Umfang des Läuferteiles (5a) eine der Phasenzahl m des Antriebsmotors (1) entsprechende Anzahl von Magnetfeldsensoren (6) in einem räumlichen Abstand von $360°/p.m$ (p = Polpaarzahl des Antriebsmotors) zueinander angeordnet sind und aus dem analogen Spannungssignal (17) der Magnetfeldsensoren (6) die Hilfsspannung abgeleitet ist.

FIG 1

EP 0 412 180 A1

# ANTRIEBSANORDNUNG MIT EINEM ANTRIEBSMOTOR

Die Erfindung betrifft eine Antriebsanordnung gemäß dem Oberbegriff des Anspruchs 1.

Eine solche Antriebsanordnung ist durch die EP-A-0 261 540 bekannt. Bei dieser Anordnung wird die für die Stromsollwertkorrektur notwendige Hilfsspannung in einer gesonderten Wicklung, die im Läufer des Motors angeordnet ist oder die Wicklung eines mit dem Motorläufer gekuppelten Tachogenerators sein kann, erzeugt und in entsprechender Weise dem Stromsollwert überlagert. Zur lagerichtigen Steuerung der einzelnen Ventile der elektronischen Leistungsstufe ist bei der bekannten Antriebsanordnung ein Rotorlagegeber vorgesehen. Es hat sich nun gezeigt, daß auch bei großer Fertigungsgenauigkeit doch noch räumliche Verschiebungen zwischen dem Rotorlagegeber und dem die Hilfsspannung erzeugenden Wicklungen auftreten können, die dann eine Verschiebung der im Kommutierungsbereich wirksamen Hilfsspannung gegenüber dem eigentlichen Kommutierungszeitpunkt zur Folge haben. Dies führt dann wieder zu Unregelmäßigkeiten im Drehmomentverlauf.

Der Erfindung liegt die Aufgabe zugrunde, eine Antriebsanordnung so auszubilden, daß derartige, durch unvermeidbare Fertigungstoleranzen bedingte Drehmomentschwankungen ausgeschaltet werden.

Die Lösung der gestellten Aufgabe gelingt durch die im Kennzeichen des Anspruchs 1 angegebenen Merkmale. Da die für die Korrektur des Stromsollwertes im Kommutierungsbereich notwendige Hilfsspannung durch den Rotorlagegeber selbst erzeugt wird, ist eine absolute Übereinstimmung hinsichtlich der Lage der zum Stromsollwert addierten Hilfsspannung und der Kommutierungszeitpunkte gegeben. Dadurch wird der Ausgleich der Drehmomentschwankungen wesentlich verbessert. Außerdem ist die Amplitude der Hilfsspannung drehzahlunabhängig.

Bei einer Antriebsanordnung gemäß den kennzeichnenden Merkmalen des Anspruchs 2 wird eine Hilfsspannung erzeugt, die zu jedem Kommutierungszeitpunkt einen ausgeprägten Extremwert hat. Durch entsprechende Überlagerung dieser Hilfsspannung mit dem Stromsollwert wird jeweils im Kommutierungsbereich eine Erhöhung des Stromsollwertes und damit des Maschinenstromes bewirkt. Durch diese Stromerhöhung wird der im Kommutierungsbereich infolge des nicht ideal trapezförmigen Verlaufes der Motor-EMK ansonsten auftretende Einbruch des Drehmomentes ausgeglichen und damit ein gleichmäßigerer Drehmomentverlauf erzielt.

Besonders vorteilhaft ist es, wenn die von den Magnetfeldsensoren abgegebenen Spannungssignale einen trapezförmigen Verlauf aufweisen. Die Anpassung der zu überlagernden Hilfsspannung an die jeweiligen Belastungsverhältnisse des Motors wird durch Multiplikation der Hilfsspannung mit dem jeweiligen Stromistwert erreicht. Die zur Steuerung der Leistungsstufe notwendigen Kommutierungssignale können mittels Komparatoren aus den Nulldurchgängen der Spannungssignale der Magnetfeldsensoren abgeleitet werden.

Anhand eines in der Zeichnung dargestellten Ausführungsbeispieles wird der Anmeldungsgegenstand nachfolgend näher beschrieben. Es zeigt:

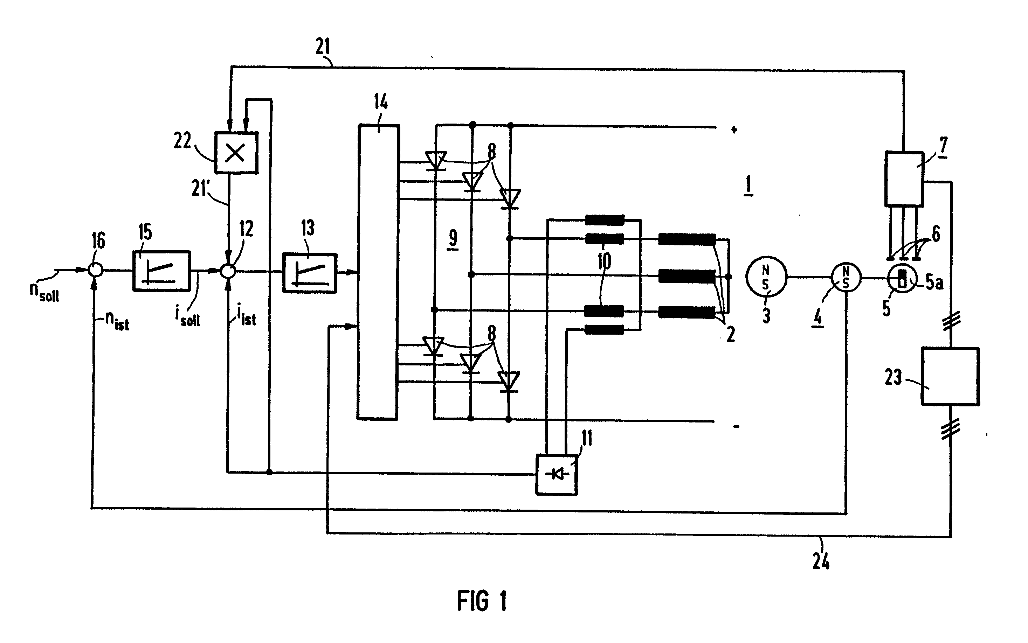

FIG 1 ein Prinzipschaltbild einer Antriebsanordnung,

FIG 2 ein Blockschaltbild einer Verarbeitungseinheit für die Spannungssignale der Magnetfeldsensoren,

FIG 3 in einem Liniendiagramm den Verlauf der von drei um 120° elektrisch gegeneinander versetzten Magnetfeldsensoren gelieferten Spannungssignale,

FIG 4 in einem Liniendiagramm den Verlauf der aus den Spannungssignalen nach Gleichrichtung und Ausfilterung des Gleichspannungsanteiles gewonnenen Hilfsspannung.

Mit 1 ist ein eine Ständerwicklung 2 und einen dauermagneterregten Läufer 3 aufweisender dreiphasiger Antriebsmotor bezeichnet. Mit dem Läufer 3 ist ein Tachogenerator 4 und ein Rotorlagegeber 5 gekuppelt. Der Tachogenerator 4 und der Rotorlagegeber 5 weisen die gleiche Polzahl wie der Antriebsmotor auf. Dem mit Dauermagneten bestückten Läuferteil 5a des Rotorlagegebers 5 sind der Phasenzahl des Antriebsmotors 1 entsprechend drei Magnetfeldsensoren 6 zugeordnet, deren Spannungssignale einer Verarbeitungseinheit 7 zugeführt werden.

Die Ständerwicklung 2 liegt mit ihren drei Phasensträngen an einer aus steuerbaren Halbleiterschaltelementen 8 bestehenden elektronischen Leistungsstufe 9. Mit zwei Phasensträngen der Ständerwicklung 2 sind Stromwandler 10 in Reihe geschaltet, deren Sekundärseiten an Gleichrichterdioden 11 angeschlossen sind. Das von den Gleichrichterdioden 11 gelieferte Gleichspannungssignal stellt den Stromistwert $i_{ist}$ dar und wird einem Vergleichsglied 12 zugeführt, dem außerdem der Stromsollwert $i_{soll}$ zugeführt wird. Das von dem Vergleichsglied gebildete Differenzsignal liegt am Eingang eines Stromreglers 13 an, dessen Ausgang mit einem Eingang eines Auswahlsteuergliedes 14 verbunden ist. An einem weiteren Eingang des Auswahlsteuergliedes 14 liegen die Steuersignale des Rotorlagegebers 5 an. An die Ausgänge des Auswahlsteuergliedes 14 sind die Steuerelektroden der steuerbaren Halbleiterschaltelement 8 angeschlossen. Durch das Auswahlsteuerglied 14 wird das von dem Stromregler 13 gelieferte Steuersignal in Abhängigkeit von den Steuersignalen des Rotorlagegebers 5 an die Steuerelektrode derjenigen Halbleiterschaltelemente 8 geschaltet, die entsprechend der Stellung des Läufers 3 des Antriebsmotors 1 Strom führen müssen.

Die Antriebsanordnung weist ferner noch einen dem Stromregler 13 überlagerten Drehzahlregler 15 auf, dem ein weiteres Vergleichsglied 16 vorgeschaltet ist, das einen Soll-Ist-Wert-Vergleich durchführt. Hierzu liegt an dem weiteren Vergleichsglied 16 ein Drehzahl-Sollwert $n_{soll}$ und der von dem Tachogenerator 4 gelieferte Drehzahl-Ist-wert $n_{ist}$ an.

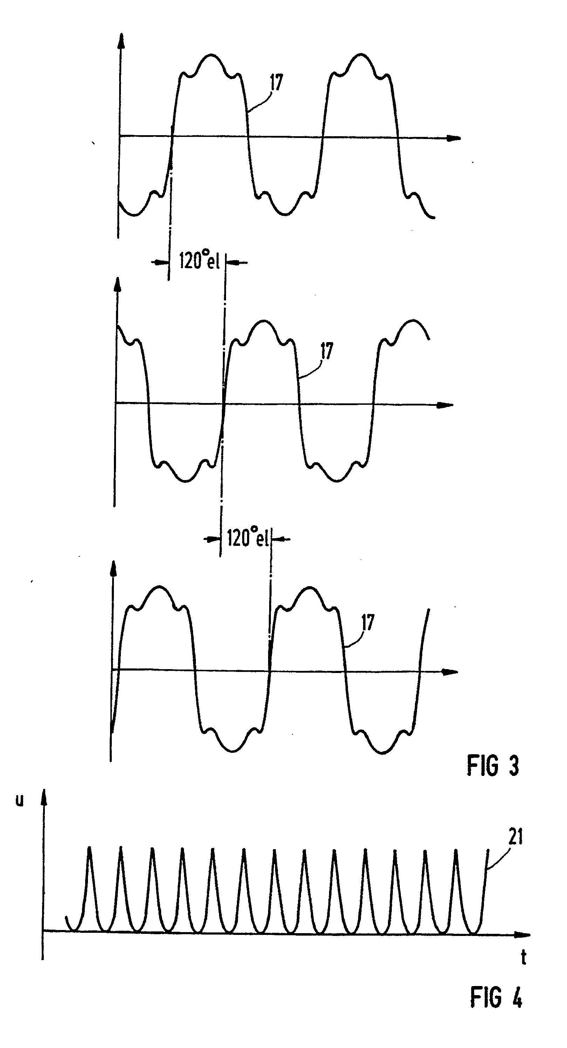

Die Magnetfeldsensoren 6 sind am Umfang des Läuferteiles 5a in einem räumlichen Winkelabstand von 360°/p.m angeordnet. Dabei entspricht m der Phasenzahl und p der Polpaarzahl des Antriebsmotors 1. Bei einem sechspoligen, dreiphasigen Antriebsmotor 1 ergibt sich somit ein räumlicher Abstand von 40° zwischen zwei Magnetfeldsensoren 6. Die von den drei Magnetfeldsensoren 6 gelieferten analogen Spannungssignale 17 weisen damit eine Phasenverschiebung von 120° elektrisch zueinander auf. Der Verlauf und die Phasenlage dieser Spannungssignale 17 ist aus der FIG 3 zu ersehen.

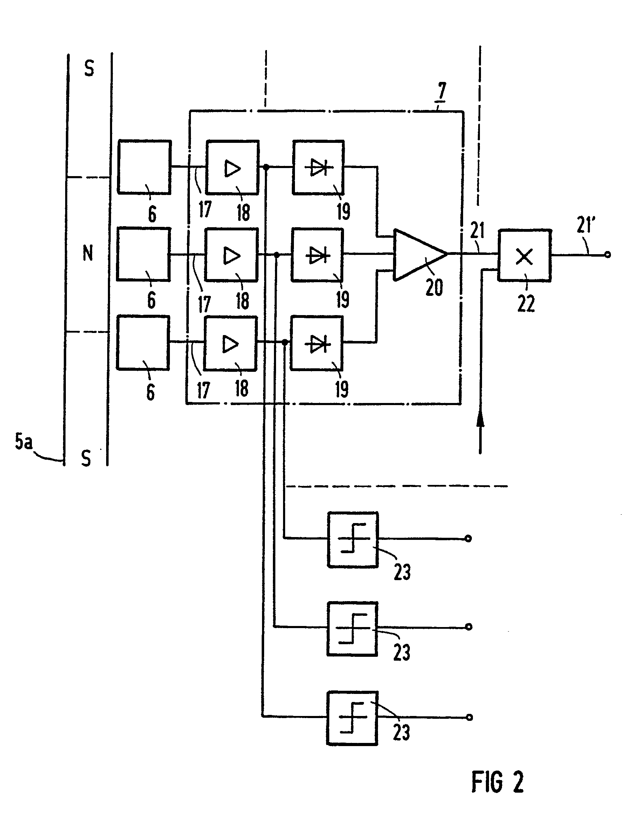

Wie die FIG 2 zeigt, werden die Spannungssignale 17 der Magnetfeldsensoren 6 Verstärkern 18 zugeführt, die in der Verarbeitungseinheit 7 vorgesehen sind. Diesen Verstärkern 18 sind Gleichrichter 19 nachgeschaltet, deren Ausgänge an einer Addierstufe 20 liegen. In dieser Addierstufe 20 wird einerseits die Summe aus den Ausgangssignalen der Gleichrichter 19 gebildet und andererseits der Gleichspannungsanteil des Summensignales ausgefiltert. Somit erscheint am Ausgang der Addierstufe 20 ein Ausgangssignal 21, das den gleichgerichteten Wechselanteilen der Spannungssignale 17 der Magnetfeldsensoren 6 entspricht.

Die FIG 4 zeigt den Verlauf eines solchen Ausgangssignales 21 der Addierstufe 20. In einer der Verarbeitungseinheit 7 nachgeschalteten Multiplikationsstufe 22 wird das Ausgangssignal 21 mit dem Stromistwert $i_{ist}$ multipliziert und damit das Ausgangssignal 21 der Additionsstufe 20 an die jeweiligen Lastverhältnisse des Antriebsmotors 1 angepaßt. Das Ausgangssignal 21' der Multiplikationsstufe 22 stellt die dem Stromsollwert $i_{soll}$ zu überlagernde Hilfsspannung dar. Diese Überlagerung erfolgt in dem Vergleichsglied 12.

Wie aus der Darstellung in FIG 2 ferner zu ersehen ist, werden die durch die Verstärker 18 verstärkten Spannungssignale 17 der Magnetfeldsensoren 6 auch Komparatoren 23 zugeführt. Die Komparatoren 23 sind so beschaltet, daß jeweils während der positiven Halbwelle des betreffenden Spannungssignales 17 ein Kommutierungssignal 24 an ihrem Ausgang erscheint, durch das das entsprechende Halbleiterschaltelement 8 der Leistungsstufe 9 gesteuert wird. Der Beginn und das Ende des jeweiligen Kommutierungssignales 24 fällt mit den entsprechenden Nulldurchgängen des betreffenden Spannungssignales 17 zusammen.

Da auch die Maxima des Ausgangssignales 21 der Verarbeitungseinheit 7 und damit auch die Maxima des Ausgangssignales 21' der Multiplikationsstufe 22 mit den Nulldurchgängen der Spannungssignale 17 der Magnetfeldsensoren 6 übereinstimmen, erfolgt die durch die Hilfsspannung bewirkte Erhöhung des Stromsollwertes $i_{soll}$ phasengleich zu den jeweiligen Kommutierungszeitpunkten. Es tritt somit keine durch Fertigungstoleranzen bedingte Verschiebung der Stromsollwerterhöhung gegenüber dem Kommutierungszeitpunkt der betreffenden Phase mehr auf. Damit werden entsprechende Drehmomentschwankungen ausgeschaltet.

## Ansprüche

1. Antriebsanordnung mit einem Antriebsmotor, dem zumindest ein Stromregler (13) zugeordnet ist, durch den die Halbleiterschaltelemente (8) einer dem Antriebsmotor (1) vorgeschalteten elektronischen Leistungsstufe (9) in Abhängigkeit von einem Rotorlagegeber (5) steuerbar sind, dessen Läuferteil (5a) mit dem Motorläufer gekuppelt ist und eine der Polzahl des Antriebsmotors entsprechende Anzahl magnetischer Pole aufweist, bei welcher Antriebsanordnung ferner der dem Stromregler (13) zugeführte Stromsollwert ($i_{soll}$) durch Überlagerung einer Hilfsspannung im jeweiligen Kommutierungszeitpunkt erhöht ist, **dadurch gekennzeichnet,** daß am Umfang des Läuferteiles (5a) eine der Phasenzahl m des Antriebsmotors (1) entsprechende Anzahl von Magnetfeldsensoren (6) in einem räumlichen Abstand von 360°/p.m (p = Polpaarzahl des Antriebsmotors) zueinander angeordnet sind und aus dem analogen Spannungssignal (17) der Magnetfeldsensoren (6) die Hilfsspannung abgeleitet ist.

2. Antriebsanordnung nach Anspruch 1, **dadurch gekennzeichnet,** daß die Anordnung der magnetischen Pole am Läuferteil (5a) des Rotorlagegebers (5) so getroffen ist, daß die von den Magnetfeldsensoren (6) gelieferten Spannungssignale (17) einen von der Sinusform abweichenden Verlauf aufweisen und die Winkelbereiche in denen die Spannungssignale (17) der einzelnen Magnetfeldsensoren (6) von der einen zu der anderen Polarität wechseln sich in Bezug zueinander zeitlich nicht überlappen und daß der gleichgerichtete Wechselspannungsanteil der Spannungssignale (17) dem Stromregler (13) als Hilfsspannung zugeführt ist.

3. Antriebsanordnung nach Anspruch 2,
**dadurch gekennzeichnet,**
daß die Spannungssignale (17) der Magnetfeldsensoren (6) einen trapezförmigen Verlauf aufweisen.

4. Antriebsanordnung nach Anspruch 1,2 oder 3,
**dadurch gekennzeichnet,**
daß die Hilfsspannung mittels einer Multiplikationsstufe (22) mit dem Stromistwert ($i_{ist}$) multipliziert ist.

5. Antriebsanordnung nach einem oder mehreren der vorhergehenden Ansprüche,
**dadurch gekennzeichnet,**
daß aus den Nulldurchgängen der Spannungssignale (17) der Magnetfeldsensoren (6) mittels Komparatoren (23) die Kommutierungssignale (24) für die elektronische Leistungsstufe (9) abgeleitet sind.

**FIG 1**

EP 0 412 180 A1

FIG 2

FIG 3

FIG 4

7

Europäisches Patentamt

# EUROPÄISCHER RECHERCHENBERICHT

Nummer der Anmeldung

EP  89 11 4589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-261540 (SIEMENS AG)<br>* das ganze Dokument *<br>--- | 1 | H02P6/02<br>H02P5/40 |
| A | EP-A-318938 (E.I. DU PONT DE NEMOURS AND COMP)<br>* Zusammenfassung; Figur 2 *<br>----- | 1 | |

**RECHERCHIERTE SACHGEBIETE (Int. Cl.5)**

H02P

Der vorliegende Recherchenbericht wurde für alle Patentansprüche erstellt

| Recherchenort | Abschlußdatum der Recherche | Prüfer |
|---|---|---|
| DEN HAAG | 05 APRIL 1990 | BEYER F. |